# FASCICULE DE BREVET EUROPEEN

(11) **EP 2 132 428 B1**
(45) Date de publication et mention de la délivrance du brevet: **28.08.2013**
(21) Numéro de dépôt: 08788067.0
(22) Date de dépôt: 28.03.2008
(51) Int. Cl.: F02K 9/95, F02K 9/52

(54) **ALLUMEUR ÉLECTROLYTIQUE POUR MOTEUR-FUSÉE À ERGOLS LIQUIDES**
ELEKTROLYTISCHER ANZÜNDER FÜR EINEN RAKETENMOTOR MIT FLÜSSIGTREIBSTOFF
ELECTROLYTIC IGNITER FOR ROCKET ENGINES USING LIQUID PROPELLANTS

(30) Priorité: 30.03.2007 FR 0754171
(43) Date de publication de la demande: 16.12.2009
(73) Titulaire: Snecma, 75015 Paris (FR)
(72) Inventeur: VALENTIAN, Dominique, F-78710 Rosny Sur Seine (FR)
(74) Mandataire: Thévenet, Jean-Bruno
(86) Numéro de dépôt international: PCT/FR2008/050541
(87) Numéro de publication internationale: WO 2008/135693

(56) Documents cités:
- JP-A- 6 088 549
- JP-A- 63 208 654
- US-A- 3 520 137
- US-A- 3 651 644
- US-A- 4 821 509
- US-A- 6 084 198

## Description

### Domaine de l'invention

La présente invention a pour objet un allumeur électrolytique pour moteur-fusée à ergols liquides, notamment cryogéniques.

L'invention concerne ainsi plus particulièrement un allumeur à torche pour moteur cryotechnique et une torche d'allumage incorporable dans un injecteur principal de moteur-fusée à ergols liquides

### Art antérieur

Les moteurs-fusées alimentés par ergols liquides sont généralement allumés soit par allumage hypergolique soit par allumage pyrotechnique, soit par allumage électrique à torche.

L'allumage hypergolique fait appel à des ergols hypergolique, tels que le mono-méthyl hydrazine (MMH) et le peroxyde d'azote (N₂O₄), qui sont bien connus, mais présentent une toxicité élevée et offrent une impulsion spécifique pratiquement limitée à 330 secondes.

Quelques moteurs-fusées oxygène liquide/hydrocarbure sont allumés par injection de liquide hypergolique avec l'oxygène liquide, en utilisant par exemple un organométallique (comme dans le cas du moteur RD-180 de la société russe NPO Energomash).

Toutefois, l'allumage hyperbolique introduit une complication supplémentaire. Certains liquides hypergoliques avec l'oxygène, comme les organométalliques, sont spontanément combustibles dans l'air, toxiques et causent des brûlures par contact. Ils posent donc des problèmes de sécurité.

Les combinaisons d'ergols non hypergoliques, par exemple oxygène liquide/hydrogène liquide ou oxygène liquide/hydrocarbure sont genéraiement allumées soit par une charge pyrotechnique (moteurs VULCAIN et HM 7), soit par une torche (moteur VINCI). Un allumeur électrique (bougie) est aussi utilisé sur certains moteurs cryotechniques. Les allumeurs à torche comprennent en général une bougie d'allumage. Dans les deux cas, la haute tension utilisée (10 à 20 kV) peut créer des difficultés. L'allumeur à torche ou à bougie présente un avantage décisif sur l'allumage pyrotechnique : le nombre d'allumages est pratiquement illimité.

Une quatrième solution, l'allumage catalytique, est utilissée avec des monergols à décomposition exothermique (hydrazine, peroxyde d'hydrogène) ou des mélanges gazeux (oxygène/hydrogène). L'hydrazine est un monergol à décomposition catalytique qui présente aussi une toxicité élevée. Il ne semble pas être utilisé d'une manière opérationnelle pour l'allumage des moteurs-fusées cryotechniques.

Les allumeurs à torche pour moteurs cryotechniques sont généralement alimentés en oxygène et hydrogène gazeux. La bougie doit être judicieusement placée pour produire l'étincelle dans une zone où le mélange de gaz est susceptible de s'allumer, mais pas trop près de la zone réactive, de manière à survivre à la flamme de la torche.

Le même problème se pose pour des propulseurs de plus petite taille, allumés directement par une bougie. C'est le cas des propulseurs de contrôle d'attitude oxygène liquide/combustible. Des propulseurs de ce type ont été utilisés sur la Navette BOURANE.

La bougie, généralement sur l'axe de l'injecteur, ne doit pas trop faire saillie dans la chambre de combustion.

Pour contourner ce problème en essai au sol, il est possible d'utiliser la lumière focalisée d'un laser dans le mélange de gaz réactif. L'étincelle résultante peut être située au point le plus favorable de l'écoulement.

Cependant, cette méthode n'est pas facilement transposable sur un moteur-fusée opérationnel, compte tenu des problèmes liés à la technologie du laser embarqué, à la tenue de la fibre optique en présence de vibrations, à la tenue de la fenêtre d'entrée du faisceau laser dans la chambre de combustion et à la tenue de l'optique de focalisation.

Dans le domaine des propulseurs à plasma pulsé, l'allumage par bougie est aussi utilisé.

Il existe cependant également un autre procédé qui consiste à chauffer rapidement l'ergol propulsif par voie électrolytique. Un tel procédé est décrit par exemple dans le brevet français n° 1 598 903 relatif à un propulseur électrothermique et à son dispositif d'alimentation.

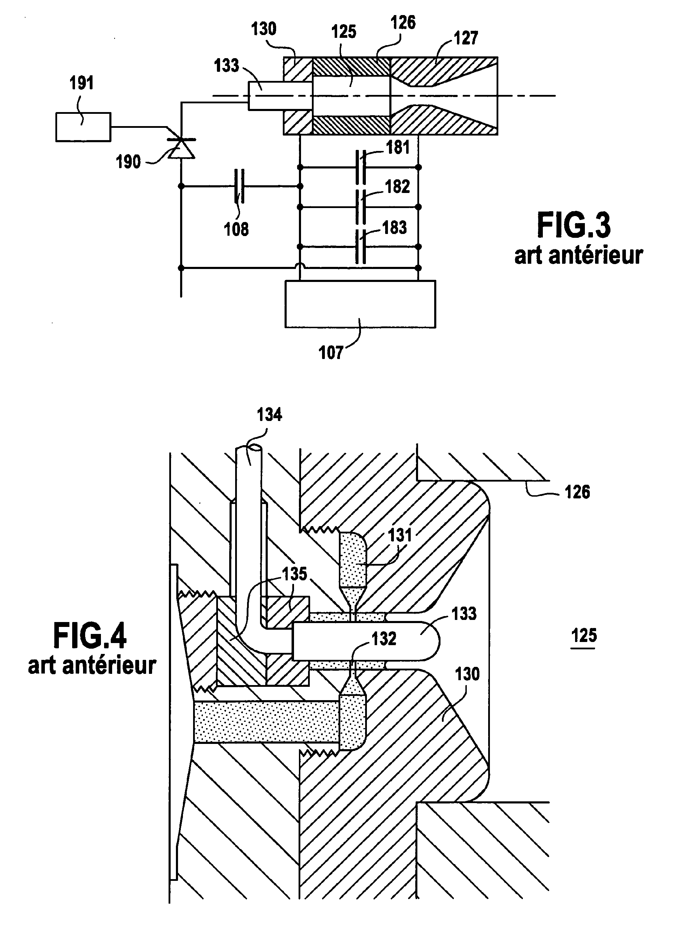

La Figure 3 montre le schéma de principe du circuit électrique d'un tel propulseur à plasma à amorçage électrolytique.

Un thyristor 190, ou un transistor de puissance, commandé par un circuit de commande 191, permet de mettre sous tension deux électrodes 133, 130 coaxiales, baignées par l'ergol propulsif (qui en l'espèce est de la glycérine rendue conductrice par addition d'iodure de sodium). Sous l'effet de la tension imposée par un condensateur 108, l'échauffement par effet Joule de la solution électrolytique conduit rapidement (en moins d'une milliseconde) à l'ébullition puis à la formation d'une décharge plasma dans le canal qui entoure l'électrode centrale 133.

Pour un courant maximum de 50 A et une tension de 400 V, la puissance instantanée peut atteindre 20 kW pour 10 mg de matière.

Pour atteindre une enthalpie de 1 MJ/kg, où l'ergol propulsif est déjà volatilisé, il suffit de 50 µs. Cette décharge amorce à son tour la décharge principale dans une chambre d'ionisation 125 entourée d'une gaine isolante 126 prolongée par une tuyère 127 qui constitue également l'anode de la chambre d'arc. La puissance instantanée atteint 1 MW et l'énergie (300 J) est suffisante pour former une enthalpie moyenne de 30 MJ/kg.

Une batterie de condensateurs 181, 182, 183 principale et le condensateur auxiliaire 108 sont chargés par un circuit d'alimentation 107 unique.

La Figure 4 montre en vue de détail l'électrode centrale 133 et la cathode 130 qui déterminent un espace annulaire 132 rempli de liquide 131. par effet capillaire. L'électrode centrale 133 est reliée à un conducteur 134 connecté au thyristor 190. Le plasma de pré-décharge débouche dans la chambre de décharge 125.

L'allumage électrolytique a été aussi proposé dans les années 70 pour réaliser la décomposition de l'hydrazine. Le brevet US 3 861 137 intitulé "Monopropellant electrolytic igniter" décrit un système utilisant deux électrodes poreuses et un feutre céramique constituant l'isolant entre les deux électrodes. La tension inter-électrodes est comprise entre 2 et 30 V. L'allumage résulte de la combinaison de l'échauffement, de la formation d'ions par électrolyse et de l'action catalytique d'une couche non-conductrice de ruthénium sur l'isolant. La décomposition se poursuit sur des grilles placées en aval.

Le brevet US 3 651 644 intitulé "Apparatus for initiating the décomposition of an exothermic propellant" décrit un système de parois coaxiales s'étendant sur toute la longueur d'une chambre de combustion. Le monergol utilisé est principalement de l'hydrazine. La tension inter-électrodes est de l'ordre de 28 V. Il n'est pas prévu que l'électrolyse puisse initier une décharge. Un lit thermique parachève la décomposition.

Dans les deux cas précités, l'objectif visé est d'augmenter le rapport surface/épaisseur, la résistivité de l'hydrazine étant élevée.

Un article plus récent (Characterisation and electrical ignition of ADN based liquid monopropellants. Anders Larsson, Niklas Wingborg, Mattias Elfberg, Patrick Appelgren, May 2005. ISSN 1650.1942) décrit un dispositif expérimental permettant d'obtenir l'allumage électrolytique d'une solution d'ADN. Le liquide est confiné dans un tube diélectrique (D = 9 mm L = 25 mm). Il est soumis à une tension de 5 000 V fournie par une batterie de condensateurs. L'allumage est obtenu en quelques millisecondes. La tension élevée est rendue nécessaire par le rapport longueur/section de la colonne de liquide.

On connaît encore par le brevet US 6 084 198 un dispositif d'amorçage de la décharge d'un propulseur MPD (magnéto-plasma dynamique) qui utilise une électrode auxiliaire en relation avec un milieu gazeux basse pression de décharge d'amorçage.

### Objet et description succincte de l'invention

L'invention vise à remédier aux inconvénients précités et notamment à permettre la réalisation d'un allumeur présentant plus de souplesse d'utilisation qu'un allumeur pyrotechnique.

En particuliers, l'invention vise à permettre des allumages multiples qui sont absolument nécessaires au moins dans les cas suivants :
- étage supérieur réallumable,
- contrôle d'attitude de satellites de lanceurs ou d'atterrisseurs planétaires utilisant des ergols non toxiques comme l'oxygène ou l'alcool éthylique,
- atterrissage avec rétrofusées fonctionnant en mode pulsé pour mission planétaire (propulsion principale utilisant des ergols non toxiques).

L'invention vise également à apporter beaucoup de souplesse pour l'utilisation d'un allumeur sur un étage principal de lanceur, notamment en cas de tir avorté, de telle sorte qu'aucune intervention sur l'allumeur ne soit nécessaire avant la tentative de lancement suivante et qu'ainsi le gain de temps soit de plusieurs jours.

L'invention vise encore à permettre que le dispositif d'allumage soit tel que le propulseur ne doive subir aucune modification entre un essai de réception et le vol.

L'invention a encore pour objet de proposer un allumeur de construction simplifiée et qui en particulier ne pose pas de problèmes de sécurité, n'exige pas l'utilisation d'un faisceau laser, et autorise l'allumage fiable d'une chambre de combustion, quelle que soit la taille de celle-ci, avec la fourniture d'une puissance instantanée très élevée.

Ces buts sont atteints conformément à l'invention grâce à une torche d'allumage incorporable dans un injecteur principal de moteur-fusée à ergols liquides, comprenant une chambre de combustion et un allumeur électrolytique, lequel allumeur électrolytique comprend une première électrode, une deuxième électrode isolée électriquement de la première électrode par un isolateur, un injecteur, un réservoir d'électrolyte, et un canal de distribution d'électrolyte, caractérisé en ce que l'injecteur constitue la première électrode et inclut un dispositif d'injection de combustible, un dispositif d'injection de comburant et un dispositif d'injection d'électrolyte, en ce que la deuxième électrode s'étend en aval au-delà de l'injecteur, en ce que l'allumeur électrolytique comprend un circuit d'alimentation électrique adapté pour porter la deuxième électrode à un potentiel compris entre 50 et 1000 V par rapport au potentiel de la première électrode et en ce que le canal de distribution d'électrolyte débouche par au moins un trou d'injection situé au voisinage de la sortie du dispositif d'injection de combustible et du dispositif d'injection de comburant de telle manière que l'électrolyte injecté par ledit trou d'injection constitue un jet libre venant frapper la deuxième électrode dans une zone située en dehors du corps de l'injecteur constitué par la première électrode, de sorte que l'électrolyse et l'inflammation d'un mélange gazeux ont lieu en aval de l'injecteur dans la chambre de combustion de la torche.

De préférence, le circuit d'alimentation électrique est adapté pour porter la deuxième électrode à un potentiel compris entre 100 et 500 V par rapport au potentiel de la première électrode constituée par l'injecteur.

Selon la présente invention, la bougie d'une torche d'allumage est: remplacée par un dispositif d'allumage à décharge électrolytique.

Selon l'invention, l'électrolyte présent dans le réservoir peut être constitué par un produit différent du combustible appliqué par le dispositif d'injection de combustible et du comburant appliqué par le dispositif d'injection de comburant.

Par ailleurs, selon l'invention, la décharge électrique produisant l'allumage des ergols dans la torche, est située en aval de l'injecteur et non à l'intérieur de celui-ci.

Le liquide électrolytique est constitué d'un solvant tel que de l'eau, de l'alcool ou un liquide ionique à faible tension de vapeur, d'un sel dont la dissociation ionique fournit la conduction ionique, comme par exemple un sel d'ammonium, et éventuellement d'un additif comme par exemple un combustible si le sel est oxydant ou tensioactif.

Le sel peut être chimiquement inerte comme l'iodure de sodium ou réactif comme un nitrate.

Le processus d'allumage a lieu de la manière suivante : un ou plusieurs jets de liquide issus de injecteur constituant une première électrode viennent frapper la deuxième électrode située à un potentiel de quelques centaines de volts par rapport au potentiel de l'injecteur. Cela introduit une densité de courant élevée dans l'électrolyte, conduit à son échauffement rapide, puis éventuellement à la formation d'un arc électrique.

Le ou les jets de liquide électrolytique sont situés en aval de l'injecteur de la torche qui produit le mélange de gaz à allumer, lequel mélange de gaz peut comprendre un combustible tel que l'hydrogène ou le méthane et un comburant tel que l'oxygène.

L'allumage peut se produire selon une ou plusieurs des manières suivantes :
- par formation de l'arc électrique par claquage dans le flux de vapeur,
- dans la masse du liquide par augmentation de température conduisant à la décomposition spontanée (liquide monergol),
- dans le cas d'un liquide combustible, par inflammation spontanée dans l'oxygène des vapeurs chaudes.

L'invention permet de retrouver l'essentiel des avantages de l'allumage laser et en particulier le fait que la zone d'inflammation peut être située à distance des parois matérielles, sans avoir les inconvénients précités liés aux fragilités et complexités de l'utilisation d'un dispositif de production et d'application d'un faisceau laser,

Selon un mode de réalisation possible, la deuxième électrode est disposée de façon centrale et une pluralité de trous d'injection d'électrolyte et les sorties du dispositif d'injection de combustible et du dispositif d'injection de carburant sont disposées autour de cette électrode centrale.

Selon un autre mode de réalisation possible, la deuxième électrode est disposée de façon latérale et désaxée par rapport au trou d'injection d'électrolyte et aux sorties du dispositif d'injection de combustible et du dispositif d'injection de comburant.

La deuxième électrode peut être réalisée en un métal réfractaire du type tungstène ou tungstène-rhénium.

Selon un mode de réalisation avantageux, le dispositif d'injection de combustible et le dispositif d'injection de carburant comprennent des orifices répartis en couronne autour d'un axe prédéterminé de l'allumeur et plusieurs trous d'injection d'électrolyte sont répartis en couronne autour de l'axe prédéterminé en présentant l'essentiel des positions angulaires décalées par rapport aux orifices répartis en couronne.

L'allumeur peut comprendre un dispositif de chauffage électrique et une isolation thermique passive pour maintenir la température de l'injecteur au-dessus du point de congélation de l'électrolyte,

Le circuit d'alimentation électrique peut comprendre une source d'alimentation électrique en courant continu, au moins un condensateur et un interrupteur, tel qu'un transistor de puissance ou un thyristor. Dans ce cas, l'injecteur constituant la première électrode présente avantageusement un potentiel proche de la masse électrique.

Le condensateur et l'interrupteur peuvent être logés dans un boîtier solidaire du corps de l'allumeur.

Selon une variante de réalisation, le circuit d'alimentation électrique peut comprendre une source d'alimentation en courant continu, au moins un condensateur, un circuit hacheur et un transformateur élévateur de tension dont le primaire et le secondaire sont isolés galvaniquement, dont le primaire est relié au circuit hacheur et dont le secondaire est connecté entre la deuxième électrode et l'injecteur constituant la première électrode.

Selon une caractéristique particulière de l'invention, l'isolateur comprend une première partie d'isolateur pouvant se dilater librement et une deuxième partie d'isolateur assurant une étanchéité entre la deuxième électrode et un support d'isolateur.

Dans ce cas, la première partie d'isolateur comprend au moins un bloc de céramique réalisé en nitrure de bore ou en alumine.

Selon un mode particulier de réalisation, la deuxième partie d'isolateur peut être réalisée en alumine et est brasée d'une part sur la deuxième électrode et d'autre part sur le support d'isolateur.

Selon un autre mode de réalisation, la deuxième partie d'isolateur peut encore être combinée à une embase de câble coaxial recevant un connecteur de câble coaxial.

Selon une variante de réalisation, la deuxième partie d'isolateur est réalisée en un matériau souple comprenant l'un des matériaux suivants : le PTFE, le PTFCE, le VESPEL, le PTFE chargé de fibres de verre, et la deuxième partie d'isolateur est montée dans un presse-étoupe monté sur le support d'isolateur.

### Brève description des dessins

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique en coupe axiale d'une tête d'allumeur électrolytique avec anode centrale selon un premier mode de réalisation de l'invention,
- la figure 2 est une vue de face de la tête d'allumeur électrolytique selon la revendication 1,
- la figure 3 est une vue schématique du circuit électrique d'un propulseur à plasma connu à amorçage électrolytique,
- la figure 4 est une vue en coupe axiale d'un exemple de chambre de prédécharge dans un propulseur électrothermique selon l'art antérieur,
- la figure 5 est une vue schématique en coupe axiale d'une tête d'allumeur électrolytique avec anode latérale décentrée, selon un deuxième mode de réalisation de l'invention,
- la figure 6 est une vue schématique en coupe axiale montrant l'intégration de la tête d'allumeur de la figure 5 dans une torche et un injecteur principal,
- la figure 7 est une vue de face d'une tête d'allumeur électrolytique montrant une variante de réalisation de la figure 2,
- la figure 8 est une vue schématique en coupe axiale d'une variante de réalisation d'une tête d'allumeur électrolytique selon l'invention avec un isolateur en deux parties,
- la figure 9 est une vue schématique en coupe axiale d'une variante de réalisation d'une tête d'allumeur électrolytique selon l'invention avec un isolateur associé à un presse-étoupe,
- la figure 10 est une vue schématique en coupe axiale d'une variante de réalisation d'une tête d'allumeur électrolytique selon l'invention avec une sortie hermétique coudée,
- la figure 11 est une vue schématique en coupe axiale d'une variante de réalisation d'une tête d'allumeur électrolytique avec circuit électrique de puissance incorporé, et
- la figure 12 est une vue schématique d'une tête d'allumeur électrolytique selon l'invention avec un circuit d'alimentation électrique incorporant un transformateur élévateur de tension.

### Description détaillée de modes particuliers de réalisation de l'invention

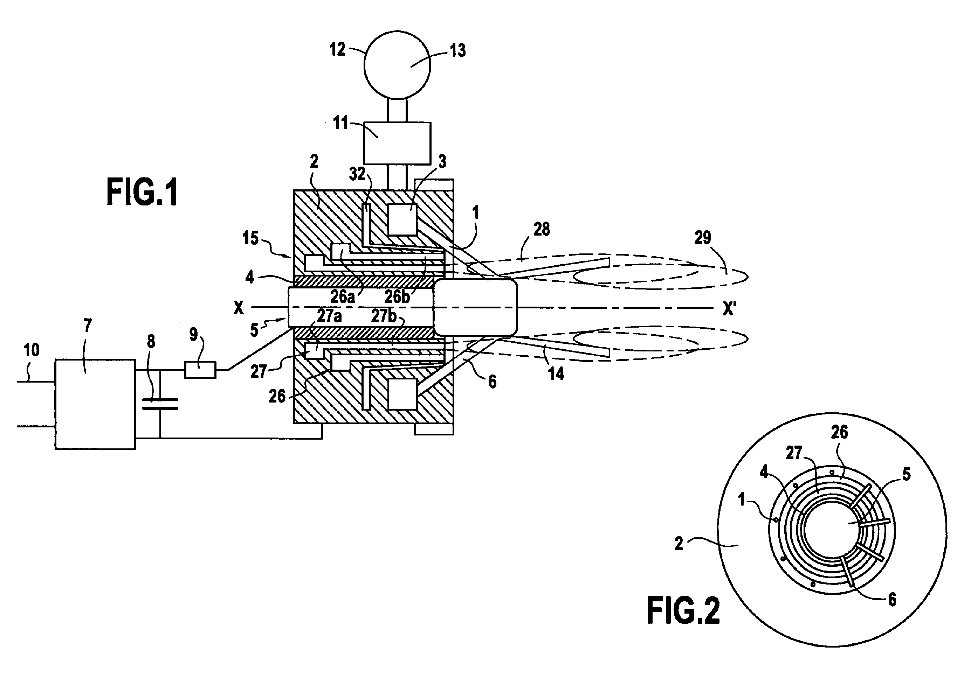

Si l'on se reporte à la figure 1, on voit un premier exemple d'allumeur électrolytique selon l'invention conçu pour être incorporé à une torche associée à un injecteur principal destiné à être monté sur une chambre de combustion de moteur-fusée à ergols liquides.

L'allumeur électrolytique comprend un injecteur qui, dans l'exemple considéré, présente un potentiel proche de la masse électrique et constitue une cathode.

L'injecteur 2 comprend de façon classique un dispositif 26 d'injection de combustible et un dispositif 27 d'injection de comburant.

Comme on peut le voir sur la figure 2, le dispositif 26 d'injection de combustible et le dispositif 27 d'injection de comburant comprennent respectivement un canal de distribution 26a, 27a et des orifices de distribution 26b, 27b répartis en couronne autour de l'axe central XX' de l'allumeur.

L'injecteur 2 comprend en outre un dispositif d'injection d'électrolyte avec un canal 3 de distribution d'électrolyte associé à une pluralité de trous 1 d'injection qui permettent la projection de jets libres vers une électrode centrale 5 qui est isolée électriquement du corps de l'injecteur 2 par un isolateur 4.

L'électrode centrale 5 qui, dans l'exemple considéré, forme une anode, s'étend axialement vers l'aval au-delà de l'injecteur 2.

Le distributeur 3 d'électrolyte est alimenté à travers une électrovanne 11 à partir du réservoir 12 contenant un électrolyte 13 qui est avantageusement constitué par un produit différent du combustible appliqué par le dispositif 26 d'injection de combustible et du comburant appliqué par le dispositif 27 d'injection de comburant.

Dans le mode de réalisation des figures 1 et 2, les trous 1 d'injection d'électrolyte sont répartis en couronne autour de l'axe XX' en présentant des positions angulaires décalées par rapport aux orifices répartis en couronne du dispositif 26 d'injection de combustible et du dispositif 27 d'injection de comburant.

Comme on peut le voir sur la figure 1, des canaux 32 peuvent être formés dans le corps de l'injecteur 2 entre le canal 3 de distribution d'électrolyte et les dispositifs 26 d'injection de combustible et de comburant, afin de constituer une isolation thermique passive et d'assurer ainsi un découplage thermique. Un dispositif de chauffage électrique 16, tel qu'une résistance, peut être avantageusement placé sur l'injecteur 2 au voisinage du canal 3 de distribution d'électrolyte afin de maintenir la température de l'injecteur 2 au-dessus du point de congélation de l'électrolyte au cours de la mise au froid du moteur-fusée à ergols cryogéniques.

Dans l'exemple de la figure 1, on a représenté schématiquement un circuit d'alimentation électrique avec une source 7 d'alimentation en courant continu à partir d'une barre 10. Le pôle négatif de la source d'alimentation 7 est relié au corps de l'injecteur 2 qui constitue ainsi une cathode. Le pôle positif de la source d'alimentation 7 est relié par l'intermédiaire d'un interrupteur 9 à l'électrode centrale 5 formant anode.

Un condensateur 8 est connecté en parallèle à la sortie de la source d'alimentation 7 de manière à permettre l'application d'un potentiel de l'ordre de quelques centaines de volts sur l'électrode 5. La décharge du condensateur 8 permet d'obtenir une puissance instantanée très élevée. L'interrupteur 9 peut être constitué par exemple par un transistor de puissance ou par un thyristor.

L'électrovanne 11 commande l'injection l'essentiel des jets d'électrolyte. Lorsque cette électrovanne 11 est ouverte, les jets d'électrolyte issus des trous d'injection 1 mettent en contact l'électrode centrale 5 formant anode et le corps de l'injecteur 2 formant cathode.

L'échauffement dû au courant d'électrolyse entraîne la formation d'une décharge électrique qui allume le mélange de gaz 28 issu des dispositifs 26, 27 d'injection de combustible et de comburant et destiné à alimenter la torche qui dans l'exemple représenté est coaxiale à l'injecteur 2. Sur la figure 1, la référence 14 désigne les précurseurs de flamme et la référence 29 désigne la flamme de la torche.

La figure 2 montre un injecteur 2 avec à titre d'exemple neuf trous 1 d'injection d'électrolyte, Le nombre de trous d'injection est choisi en fonction du débit à assurer.

La partie gauche de la figure 2 montre l'injecteur avant une séquence d'allumage et la partie droite de cette figure 2 montre l'injecteur en fonctionnement avec des jets d'électrolytes.

Il est important de noter que les jets d'électrolyte 6 issus l'essentiel des trous d'injection 1 sont situés en aval de l'injecteur 2 qui produit le mélange de gaz à allumer et: viennent frapper l'électrode 5 dans une zone située en dehors du corps de l'injecteur 2.

La densité du courant élevée dans l'électrolyte, réchauffement rapide de cet électrolyte et la formation éventuelle d'un arc électrique se produisent ainsi au sein de la torche en aval de l'éjecteur 2 et non à l'intérieur de l'éjecteur.

Contrairement à des dispositifs de l'art antérieur, l'électrolyse a lieu dans un jet libre et non dans un espace confiné entre deux électrodes.

L'alimentation électrique sous une tension relativement élevée, de 50 V à 1000 V ou de préférence de 100 à 500 V, permet de passer à un claquage dans la vapeur après échauffement du liquide. Le niveau de tension électrique reste cependant suffisamment modeste pour qu'il n'existe pas de problèmes d'isolation électrique.

Le liquide électrolytique 13 est constitué d'un solvant pouvant être constitué par de l'eau, de l'alcool ou un liquide ionique à faible tension de vapeur, d'un sel dont la dissociation ionique fournit la conduction ionique et éventuellement d'un additif (par exemple un combustible si le sel est oxydant ou tensioactif).

A titre d'exemple de liquides électrolytiques selon la présente invention, on peut citer :
- eau et chlorure d'ammonium,
- glycérol, iodure de sodium et additif fluidifiant,
- alcool isopropylique et nitrate d'ammonium,
- liquide ionique fluoré à basse tension de vapeur et nitrate d'ammonium,

Le liquide ionique peut par exemple être choisi parmi les produits suivants : di-éthylammonium formate, éthyl-méthyl-imidazolium tétra-fluoroborate.

Le liquide électrolytique peut être aussi constitué d'un monergol non toxique à base de nitrates qui comprend une solution aqueuse de nitrate (comme par exemple HAN = hydroxyle ammonium nitrate, ADN = ammonium di-nitramine, HNF = hydrazinium nitro-formate) avec addition d'un combustible soluble dans l'eau tel qu'un alcool ou le TEAN (triéthanolammonium nitrate).

L'allumage d'une auto-décomposition d'un monergol nitrate en solution ionique peut être obtenu par chauffage électrolytique.

Les solutions aqueuses de nitrates présentent une conductibilité ionique "C" importante qui augmente avec la température T (voir le document : "New nitrogen based monopropellants (HAN, AND, HNF), physical chemistry of concentrated ionic aqueous solutions", C Kappenstein, N Pillet, A Melchior.

Elle atteint 0,05 (Ω.cm)⁻¹ à -12°C et 70 % de concentration et 0,2 (Ω.cm)⁻¹ à +40°C. Elle suit une loi du type : In (C) = 1/(T - To).

La disposition à jets libres 6 selon l'invention présente une résistance élevée et permet de fonctionner à tension élevée, de l'ordre de plusieurs centaines de volts. L'échauffement se produit à l'extérieur de l'injecteur. Si le jet s'enflamme avant d'atteindre l'électrode centrale 5, les gaz peuvent se détendre librement dans la chambre de combustion.

Lorsqu'un film de vapeur se produit sur l'électrode centrale 5 (la partie la plus chaude du jet) le passage du courant est interrompu et la totalité de la tension se retrouve sur le film. Le produit pression x distance étant en dessous du minimum de Paschen, il y a claquage et l'étincelle enflamme le reste du mélange chauffé.

Le chauffage peut entraîner l'évaporation sélective (la distillation) de l'espèce la plus volatile, par exemple un alcool. Les vapeurs d'alcool mélangées à l'air faciliteront l'inflammation.

L'exemple suivant donne un ordre de grandeur des paramètres physiques de la décharge dans le cas d'un injecteur à jets multiples :

### Jet élémentaire :

| | |
|---|---|
| Diamètre | 1 mm |
| Longueur | 5 mm |
| Vitesse | 3 m/s |
| Débit masse | 3,3 g/s |
| Tension | Vo = 500 V |

La température de l'ergol est à 298 K à la sortie de l'injecteur

La puissance initiale dissipée est de 600 W (résistance = 410 Ohm).

Au bout de 2 ms, le profil de température du jet commence à se stabiliser, la partie aval du jet atteint 398 K (125°C).

La puissance dissipée atteint 1560 W et la résistance du jet est 160 Ohm.

Pour une tête d'allumeur à 5 orifices, on obtient le bilan suivant :

| | |
|---|---|
| Puissance initiale | = 3 000 W |
| Puissance à 2 ms | = 7 800 W |
| Débit | = 16,5 g/s |

A titre de comparaison, la puissance thermique fournie par la décomposition exothermique du monergol au débit de 16,5 g/s est supérieure à 50 kW.

La puissance électrique est fournie par le condensateur 8 capable de stocker au moins le double de l'énergie dissipée dans la décharge.

Le courant d'électrolyse atteint 15,6 A, ce qui peut être contrôlé par un interrupteur 9 constitué par un transistor de puissance.

Le condensateur 8 est chargé - de préférence à courant constant par un convertisseur continu/continu 7 élévateur de tension alimenté par la barre 10 (bus) du satellite ou du missile sur lequel est placé le moteur-fusée équipé de l'allumeur électrolytique.

L'injection de monergol est contrôlée par l'électrovanne 11, la mise sous tension étant simultanée (il n'y aura pas de passage de courant avant: 5 à 10 ms, temps de réponse de l'électrovanne).

Lorsque l'allumage est obtenu, le passage du courant peut être interrompu par fermeture de l'interrupteur 9 constitué par un transistor de puissance ou un thyristor.

L'interruption du courant provoque la fermeture de l'électrovanne 11 et donc l'interruption du jet liquide.

A titre de variante, l'énergie peut être stockée dans une batterie d'accumulateurs à décharge rapide.

Selon l'invention, l'allumage ayant lieu dans un liquide il est peu sensible à la pression : l'allumeur peut fonctionner aussi bien sous vide (l'ébullition du liquide n'est pas immédiate) que sous pression (de la pression atmosphérique à plusieurs MPa). Il peut aussi fonctionner en stimulation d'altitude (quelques centaines de pascals).

Au contraire, les allumeurs à bougie et étincelle électrique peuvent être perturbés par une pression de fonctionnement différente du vide spatial ou de la pression atmosphérique :

Le fonctionnement en simulation d'altitude ou dans la haute atmosphère peut conduire à des problèmes d'isolation dans l'alimentation et le câblage car la tension de fonctionnement est très élevée (10 à 20 kV).

Le fonctionnement sous forte pression devient difficile : le pouvoir isolant du gaz augmente, compliquant l'allumage.

L'allumeur électrolytique utilise une tension modeste, de l'ordre de 500 V ce qui simplifie les problèmes d'isolations en particulier dans la zone de pression correspondant au fonctionnement de simulation d'altitude.

Le jet peut être positionné de manière à atteindre la zone où la richesse du mélange est le plus susceptible d'entretenir la combustion.

De ce point de vue il présente des avantages analogues à l'allumage laser tout en étant plus facile à réaliser.

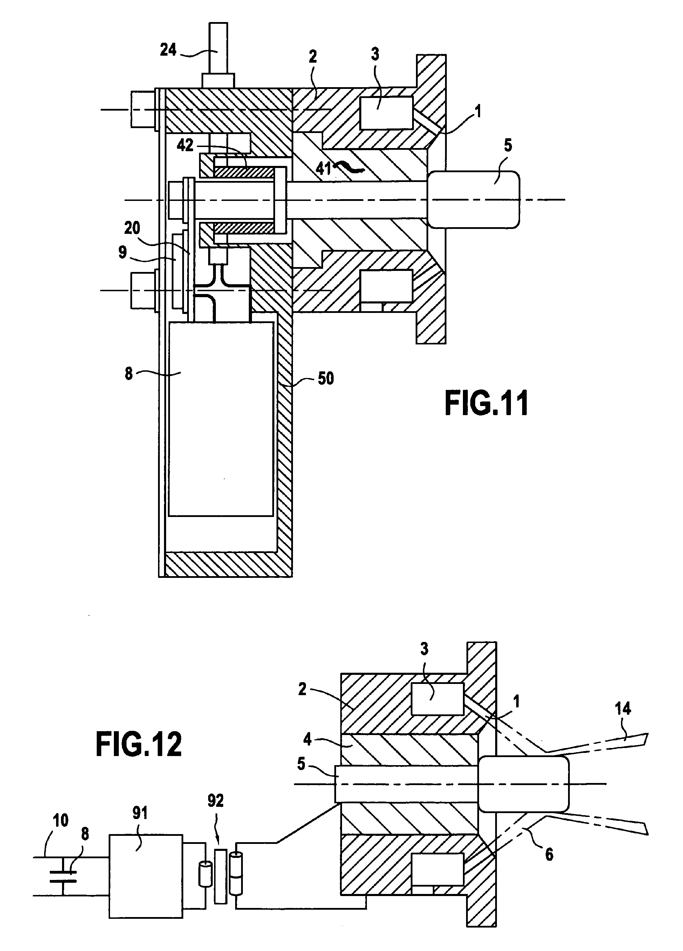

Sur la figure 12 on a représenté une variante de réalisation selon laquelle l'électrolyse est conduite en courant alternatif.
A partir d'une source de courant continu telle que la barre 10 du satellite ou du missile sur lequel est placé le moteur-fusée équipé de l'allumeur électrolytique, l'énergie est stockée dans des super condensateurs 8 ou dans une batterie d'accumulateurs qui alimentent un hacheur 91 constitué de transistors de puissance (par exemple des IGBT) capables de contrôler un courant de 100 A ou plus à une fréquence comprise entre 10 et 100 kHz et un transformateur élévateur de tension 92, de préférence à ferrite, dont le secondaire alimente directement l'allumeur électrolytique, entre la première électrode constituée par le corps de l'injecteur 2 et la deuxième électrode constituée par l'électrode 5.

Le fonctionnement du transformateur 92 et des transistors du circuit 91 étant bref (quelques dizaines de millisecondes), il n'est pas nécessaire de prévoir un refroidissement important.

On a décrit en référence aux figures 1, 2 et 12 un allumeur électrolytique comportant une électrode centrale 5.

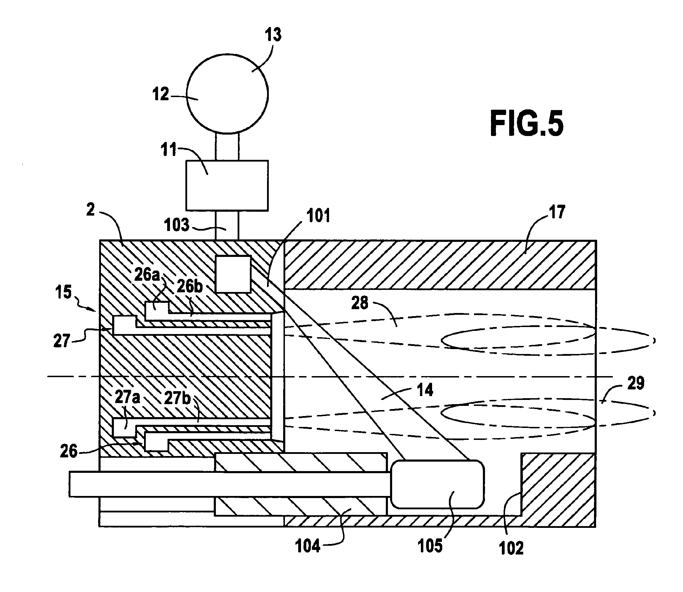

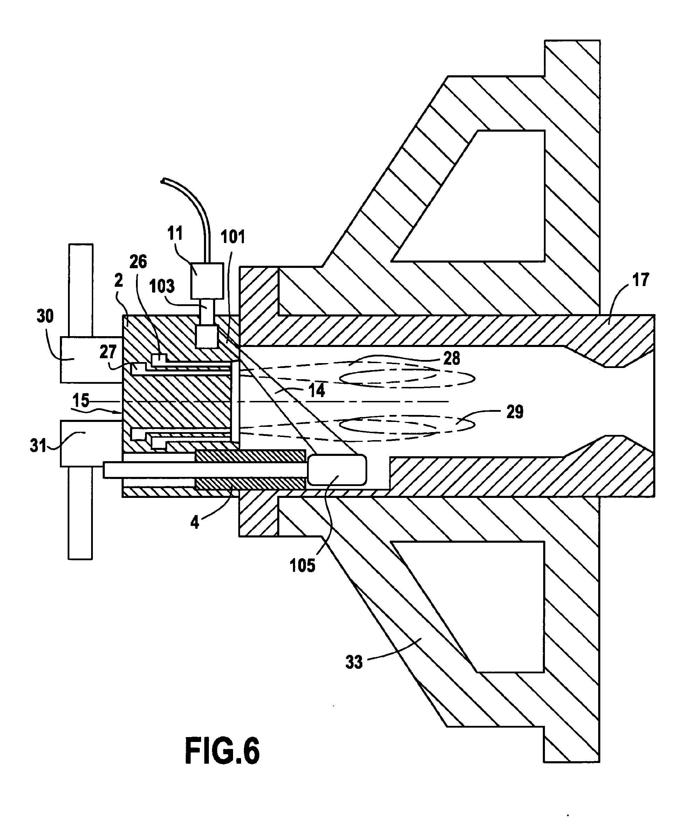

Selon un autre mode de réalisation possible, illustré sur les figures 5 et 6, la deuxième électrode 105 (formant anode dans le cas d'une alimentation en courant continu) n'est pas placée en position centrale, mais est située de façon latérale et désaxée par rapport à l'axe longitudinal de l'allumeur et de la torche associée 17. Dans ce cas, le canal 103 de distribution d'électrolyte est disposé sur un premier côté de l'allumeur (en haut sur les figures 5 et 6), à l'extérieur des dispositifs 26 et 27 d'injection de combustible et de comburant, tandis que l'électrode 105 est placée dans un évidement 102 formé dans la paroi opposée (en bas sur les figures 5 et 6).

Au moins un trou d'injection 101 est formé à partir du canal de distribution 103 dans le corps de l'injecteur 2 de manière à créer au moins un jet transversal 101 qui vient frapper l'électrode 105 et présente les mêmes propriétés que dans le cas du mode de réalisation précédemment décrit, le circuit électrique illustré sur la figure 1 ou la figure 12 pouvant être mis en oeuvre de la même manière avec le mode de réalisation des figures 5 et 6 et le liquide électrolytique étant également choisi parmi les produits mentionnés plus haut.

Ainsi la dissipation de puissance électrique par conduction ionique dans le jet d'électrolyte, par exemple comprise entre 100 et: 1000 W par gramme par seconde, provoque une élévation de température suffisante, par exemple de 5000 à 20 000°C/s, pour provoquer le claquage électrique de l'électrolyte ou sa décomposition spontanée si l'électrolyte est un monergol, le mélange gazeux 28 issu des dispositifs 26, 27 d'injection de combustible et de comburant (qui dans l'exemple représenté sont de type coaxial) étant enflammé par le précurseur de flamme ou gaz de combustion 14 dans la torche 17.

Sur la figure 6, on voit l'intégration de l'allumeur électrolytique dans la torche 17 alimentée en ergols gazeux à partir des dispositifs 26, 27 d'injection de combustible et de comburant, eux-mêmes alimentés par l'intermédiaire d'électrovannes 30, 31.

La torche 17 est elle-même incorporée dans l'injecteur principal 33 du moteur-fusée et située dans l'axe de celui-ci.

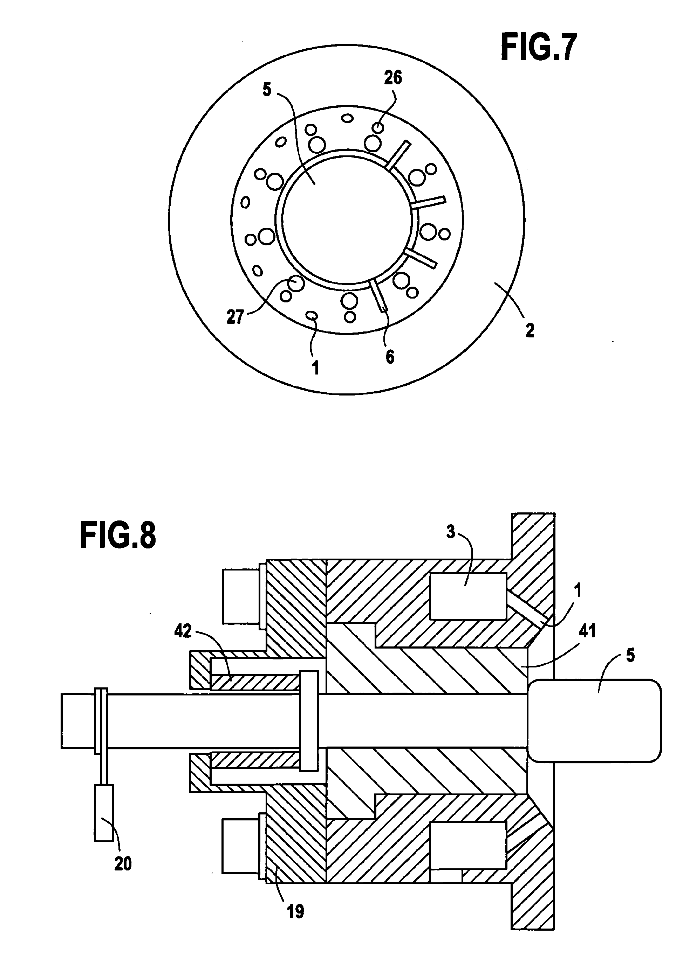

La figure 7 montre une variante de réalisation d'un allumeur électrolytique selon l'invention avec une électrode centrale 5. Le dispositif 26 d'injection de combustible et le dispositif 27 d'injection de comburant comprennent des séries d'orifices constituant des doublets décalés angulairement par rapport aux jets de liquide issus des trous d'injection 1 du liquide électrolytique, de manière à limiter le soufflage des jets de liquide par les jets de gaz.

Comme dans le cas de la figure 2, la figure 7 montre sur sa moitié gauche l'injecteur 2 avant une séquence d'allumage et sur sa moitié droite l'injecteur 2 pendant une séquence d'allumage avec les jets d'électrolyte 6.

Les figures 8 à 1.1 illustrent des modes particuliers de réalisation de l'isolateur interposé entre l'électrode centrale 5 formant la deuxième électrode et le corps de l'injecteur 2 formant la première électrode. Comme dans le cas de la figure 12, pour des raisons de simplification, on n'a pas représenté sur les figures 7 à 11 le dispositif 15 d'injection de torche comprenant le dispositif 26 d'injection de combustible et le dispositif 27 d'injection de comburant.

Sur les figures 8 à 11 on n'a pas non plus représenté le circuit d'alimentation électrique, qui peut être analogue à ceux décrits en référence aux figures 1 et 12, ni les éléments associés au distributeur 3 de liquide électrolytique tels que l'électrovanne 11, le réservoir 18, la résistance électrique 16 et le découplage thermique 32 illustrés sur la figure 1.

La figure 8 montre un isolateur électrique réalisé en deux parties. La partie aval 41 située en regard de la chambre de combustion est un bloc de céramique monté avec un jeu mécanique de manière à pouvoir se dilater librement. La partie amont 42 assure l'étanchéité. Elle est brasée sur le support d'isolateur 19 et sur l'électrode centrale 5. Le montage permet de solliciter l'isolateur 41, 42 en compression (face à un effet de fond et à la pression de combustion).

La partie aval 41 peut être réalisée en nitrure de bore ou en alumine tandis que la partie amont 42 peut être en alumine.

Sur la figure 8, la référence 20 désigne une connexion électrique.

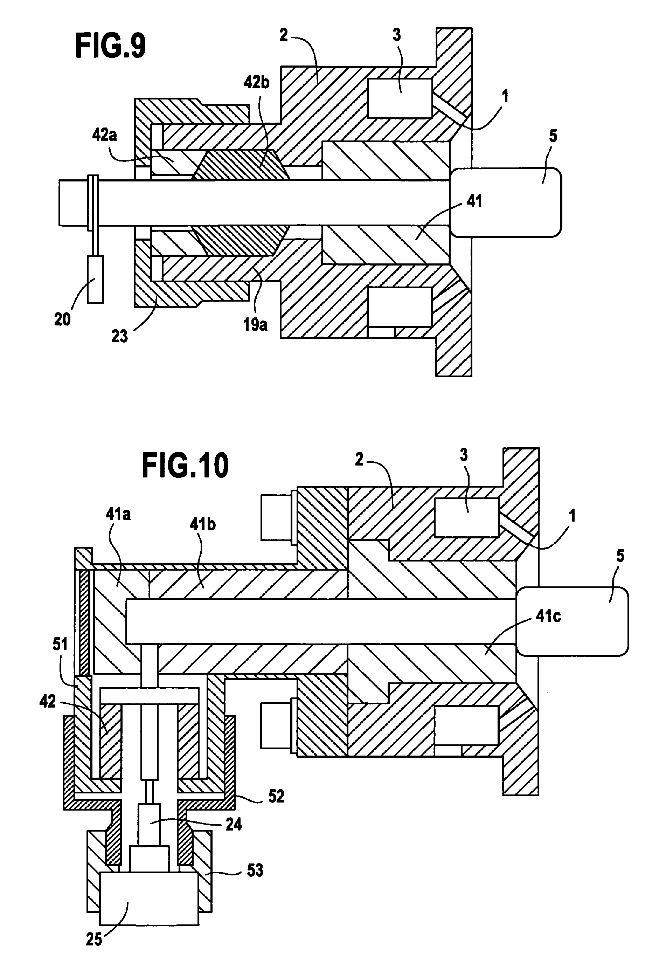

La figure 9 montre un isolateur électrique avec un presse~ étoupe.

La partie aval 41 de l'isolateur électrique assure le rôle de paroi coupe-feu et peut être réalisée de façon analogue à la partie aval 41 du mode de réalisation de la figure 8.

L'étanchéité et le maintien de l'électrode centrale 5 sont assurés par un presse-étoupe composé d'un isolateur souple 42b situé à proximité de la partie aval 41, d'une rondelle 42a de poussée isolante et d'un écrou 23 qui est vissé sur une partie arrière 19a de l'injecteur 2.

L'isolateur souple 42b peut être réalisé en PTFE, PTFCE ou PTFE chargé de fibres de verre ou en un matériau analogue tel que par exemple le produit de la société DuPont connu sous la dénomination VESPEL®.

La figure 10 montre un isolateur électrique en plusieurs parties qui vise à présenter un encombrement minimum.

Dans le cas de la figure 10, la partie aval de l'isolateur est elle-même divisée en deux ou trois parties 41a, 41b, 41c. La partie amont 42 de l'isolateur est réalisée de façon coudée. Elle peut être montée et maintenue en place par un obturateur métallique 51 vissé ou soudé sur la partie arrière de l'injecteur 2.

Le câble 24 d'alimentation électrique de l'électrode centrale 5 peut être raccordé à un câble coaxial 25 par un élément de raccord 53 associé à une embase 52 rapportée sur l'obturateur métallique 51.

Les modes de réalisation des figures 9 et 10 permettent de minimiser les interférences électromagnétiques provoquées par le courant de décharge.

La figure 11 montre un exemple d'allumeur électrolytique avec un circuit de puissance incorporé dans un boîtier 50 rapporté sur le corps de l'injecteur 2. L'isolateur électrique peut être réalisé en deux parties 41, 42 comme dans le cas du mode de réalisation de la figure 8.

Le condensateur 8 et le transistor de puissance 9 formant interrupteur sont incorporés dans le boîtier 50.

La connexion 20 avec l'électrode centrale 5 peut être réalisée sous la forme d'un circuit imprimé supportant le transistor de puissance 9. Les liaisons électriques sont ainsi réduites à des câbles 24 de faible puissance qui sont légers et peuvent supporter des rayons de courbure faibles.

Dans les différents modes de réalisation décrits, l'électrode centrale 5 ou l'électrode déportée 105, peut être réalisée en métal réfractaire du type tungstène ou tungstène/rhénium.

## Revendications

1. Torche d'allumage (17) incorporable dans un injecteur principal (33) de moteur-fusée à ergols liquides, comprenant une chambre de combustion et un allumeur électrolytique , lequel allumeur électrolytique comprend une première électrode (2), une deuxième électrode (5) isolée électriquement de la première électrode (2) par un isolateur (4), un injecteur, un réservoir (12) d'électrolyte, et un canal (3) de distribution d'électrolyte,
**caractérisé en ce que** l'injecteur constitue la première électrode (2) et inclut un dispositif (26) d'injection de combustible, un dispositif (27) d'injection de comburant et un dispositif (1) d'injection d'électrolyte, **en ce que** la deuxième électrode (5) s'étend en aval au-delà de l'injecteur (2), **en ce que** l'allumeur électrolytique comprend un circuit d'alimentation électrique adapté pour porter la deuxième électrode (5) à un potentiel compris entre 50 et 1000 V par rapport au potentiel de la première électrode (2) et **en ce que** le canal (3) de distribution d'électrolyte débouche par au moins un trou d'injection (1) situé au voisinage de la sortie du dispositif (26) d'injection de combustible et du dispositif (27) d'injection de comburant de telle manière que l'électrolyte injecté par ledit trou d'injection (1) constitue un jet libre venant frapper la deuxième électrode (5) dans une zone située en dehors du corps de l'injecteur constitué par la première électrode (2), de sorte que l'électrolyse et l'inflammation d'un mélange gazeux ont lieu en aval de l'injecteur dans la chambre de combustion de la torche (17).

2. Torche selon la revendication 1, **caractérisée en ce que** la deuxième électrode (5) est disposée de façon centrale et **en ce qu'**une pluralité de trous (1) d'injection d'électrolyte et les sorties du dispositif (26) d'injection de combustible et du dispositif (27) d'injection de comburant sont disposés autour de l'électrode centrale (5).

3. Torche selon la revendication 1, **caractérisée en ce que** la deuxième électrode (105) est disposée de façon latérale et désaxée par rapport au trou (101) d'injection d'électrolyte et aux sorties du dispositif (26) d'injection de combustible et du dispositif (27) d'injection de comburant.

4. Torche selon l'une quelconque des revendications 1 à 3, **caractérisée en ce que** la deuxième électrode (5 ; 105) est réalisée en métal réfractaire du type tungstène ou tungstène/rhénium.

5. Torche selon l'une quelconque des revendications 1 à 4, **caractérisée en ce que** l'électrolyte présent: dans le réservoir (12) est constitué par un produit différent du combustible appliqué par le dispositif (26) d'injection de combustible et du comburant appliqué par le dispositif (27) d'injection de comburant

6. Torche selon l'une quelconque des revendications 1 à 5, **caractérisée en ce que** l'électrolyte est constitué d'une solution aqueuse d'un sel tel qu'un sel d'ammonium.

7. Torche selon l'une quelconque des revendications 1 à 5, **caractérisée en ce que** l'électrolyte comprend un liquide ionique à basse tension de vapeur.

8. Torche selon la revendication 7, **caractérisée en ce que** le liquide ionique est constitué de l'un des composés suivants : di-éthylammonium formate, éthyl-méthy-imidazolium tétra-fluoroborate.

9. Torche selon quelconque des revendications 1 à 8, **caractérisée en ce que** l'électrolyte comprend un monergol à base de nitrates en solution aqueuse avec addition d'un combustible soluble dans l'eau.

10. Torche selon l'une quelconque des revendications 1 et 2, **caractérisée en ce que** le dispositif (26) d'injection de combustible et le dispositif (27) d'injection de comburant comprennent des orifices répartis en couronne autour d'un axe prédéterminé de l'allumeur et **en ce que** plusieurs trous (1) d'injection d'électrolyte sont répartis en couronne autour dudit axe prédéterminé en présentant des positions angulaires décalées par rapport aux dits orifices répartis en couronne.

11. Torche selon l'une quelconque des revendications 1 à 10, **caractérisée en ce qu'**il comprend un dispositif de chauffage électrique (16) et une isolation thermique passive (32) pour maintenir la température de l'injecteur (2) au-dessus du point de congélation de l'électrolyte.

12. Torche selon l'une quelconque des revendications 1 à 11, **caractérisée en ce que** le circuit d'alimentation électrique comprend une source d'alimentation en courant continu (10, 7), au moins un condensateur (8) et un interrupteur (9) et **en ce que** l'injecteur (2) constituant la première électrode présente un potentiel proche de la masse électrique.

13. Torche selon la revendication 12, **caractérisée en ce que** l'interrupteur (9) comprend un transistor de puissance ou un thyristor.

14. Torche selon la revendication 12 ou la revendication 13, **caractérisée en ce que** le condensateur (8) et l'interrupteur (9) sont logés dans un boîtier (50) solidaire du corps de l'allumeur.

15. Torche selon l'une quelconque des revendications 1. à 11, **caractérisée en ce que** le circuit d'alimentation électrique comprend une source d'alimentation en courant continu (10), au moins un condensateur (8), un circuit hacheur (91) et un transformateur (92) élévateur de tension, dont le primaire et le secondaire sont isolés galvaniquement, dont le primaire est relié au circuit hacheur (91) et dont le secondaire est connecté entre la deuxième électrode (5) et l'injecteur (2) constituant la première électrode.

16. Torche selon l'une quelconque des revendications 1 à 15, **caractérisée en ce que** l'isolateur (4) comprend une première partie d'isolateur (41) pouvant se dilater librement et une deuxième partie d'isolateur (42) assurant une étanchéité entre la deuxième électrode (5) et un support d'isolateur (19).

17. Torche selon la revendication 16, **caractérisée en ce que** la première partie d'isolateur (41) comprend au moins un bloc de céramique réalisé en nitruré de bore ou en alumine.

18. Torche selon la revendication 16 ou la revendication 17, **caractérisée en ce que** la deuxième partie d'isolateur (42) est réalisée en alumine et est brasée d'une part sur la deuxième électrode (5) et d'autre part sur le support d'isolateur (19).

19. Torche selon la revendication 16 ou la revendication 17, **caractérisée en ce que** la deuxième partie d'isolateur (42) est réalisée en un matériau souple comprenant l'un des matériaux suivants : le PTFE, le PTFCE, le VESPEL, le PTFE chargé de fibres de verre, et **en ce que** la deuxième partie d'isolateur (42) est montée dans un presse-étoupe (23) monté sur le support d'isolateur (19a).

20. Torche selon la revendication 16 ou la revendication 17, **caractérisée en ce que** la deuxième partie d'isolateur (42) est combinée à une embase (52) de câble coaxial recevant un connecteur (25) de câble coaxial (24).

21. Torche selon l'une quelconque des revendications 1 à 20, **caractérisée en ce que** le circuit d'alimentation électrique est adapté pour porter la deuxième électrode (5) à un potentiel compris entre 100 et 500 V par rapport au potentiel de la première électrode constituée par l'injecteur.

## Patentansprüche

1. Zündfackel (17), die in einen Hauptinjektor (33) eines Flüssigtreibstoff-Raketentriebwerks einbaubar ist, umfassend eine Brennkammer und einen elektrolytischen Zünder, wobei der elektrolytische Zünder eine erste Elektrode (2), eine zweite Elektrode (5), die durch einen Isolator (4) von der ersten Elektrode (2) elektrisch isoliert ist, einen Injektor, einen Elektrolytbehälter (12) und einen Kanal (3) zur Elektrolytverteilung umfaßt,
**dadurch gekennzeichnet, daß** der Injektor die erste Elektrode (2) bildet und eine Vorrichtung (26) zum Einspritzen von Brennstoff, eine Vorrichtung (27) zum Einspritzen von Verbrennungsmittel sowie eine Vorrichtung (1) zum Einspritzen von Elektrolyt einschließt, daß die zweite Elektrode (5) sich stromabwärts über den Injektor (2) hinaus erstreckt, daß der elektrolytische Zünder einen Stromversorgungskreis umfaßt, der dazu ausgelegt ist, die zweite Elektrode (5) auf ein Potential zwischen 50 und 1000 V gegenüber dem Potential der ersten Elektrode (2) zu bringen, und daß der Elektrolytverteilungskanal (3) durch wenigstens ein Einspritzloch (1), das in der Nähe des Ausgangs der Brennstoffeinspritzvorrichtung (26) und der Verbrennungsmitteleinspritzvorrichtung (27) gelegen ist, derart ausmündet, daß der über das Einspritzloch (1) eingespritzte Elektrolyt einen freien Strahl bildet, der in einem außerhalb des Körpers des durch die erste Elektrode (2) gebildeten Injektors befindlichen Bereich auf die zweite Elektrode (5) trifft, so daß die Elektrolyse und das Entzünden eines Gasgemischs nach dem Injektor in der Brennkammer der Fackel (17) stattfinden.

2. Fackel nach Anspruch 1, **dadurch gekennzeichnet, daß** die zweite Elektrode (5) zentral angeordnet ist und daß eine Vielzahl von Elektrolyteinspritzlöchern (1) sowie die Ausgänge der Brennstoffeinspritzvorrichtung (26) und der Verbrennungsmitteleinspritzvorrichtung (27) um die zentrale Elektrode (5) herum angeordnet sind.

3. Fackel nach Anspruch 1, **dadurch gekennzeichnet, daß** die zweite Elektrode (105) seitlich und gegenüber dem Elektrolyteinspritzloch (101) sowie den Ausgängen der Brennstoffeinspritzvorrichtung (26) und der Verbrennungsmitteleinspritzvorrichtung (27) versetzt angeordnet ist.

4. Fackel nach einem der Ansprüche 1 bis 3, **dadurch gekennzeichnet, daß** die die zweite Elektrode (5; 105) aus hochschmelzendem Metall vom Typ Wolfram oder Wolfram/Rhenium ausgebildet ist.

5. Fackel nach einem der Ansprüche 1 bis 4, **dadurch gekennzeichnet, daß** der in dem Behälter (12) vorhandene Elektrolyt durch ein anderes Produkt als den durch die Brennstoffeinspritzvorrichtung (26) aufgebrachten Brennstoff und als das durch die Verbrennungsmitteleinspritzvorrichtung (27) aufgebrachte Verbrennungsmittel gebildet ist.

6. Fackel nach einem der Ansprüche 1 bis 5, **dadurch gekennzeichnet, daß** der Elektrolyt von einer wäßrigen Lösung eines Salzes, wie eines Ammoniumsalzes, gebildet ist.

7. Fackel nach einem der Ansprüche 1 bis 5, **dadurch gekennzeichnet, daß** der Elektrolyt eine ionische Flüssigkeit mit niedrigem Dampfdruck umfaßt.

8. Fackel nach Anspruch 7, **dadurch gekennzeichnet, daß** die ionische Flüssigkeit von einer der folgenden Verbindungen gebildet ist: Diethylammoniumformiat, Ethyl-Methyl-Imidazolium-Tetrafluoroborat.

9. Fackel nach einem der Ansprüche 1 bis 8, **dadurch gekennzeichnet, daß** der Elektrolyt ein Monergol auf der Basis von Nitraten in wäßriger Lösung mit Zugabe eines wasserlöslichen Brennstoffs umfaßt.

10. Fackel nach einem der Ansprüche 1 und 2, **dadurch gekennzeichnet, daß** die Brennstoffeinspritzvorrichtung (26) und die Verbrennungsmitteleinspritzvorrichtung (27) Öffnungen umfassen, die kranzförmig um eine vorbestimmte Achse des Zünders verteilt sind, und daß mehrere Elektrolyteinspritzlöcher (1) kranzförmig um die vorbestimmte Achse verteilt sind und dabei gegenüber den kranzförmig verteilten Öffnungen versetzte Winkelstellungen aufweisen.

11. Fackel nach einem der Ansprüche 1 bis 10, **dadurch gekennzeichnet, daß** sie eine elektrische Heizvorrichtung (16) und eine passive Wärmeisolierung (32), um die Temperatur des Injektors (2) oberhalb des Gefrierpunktes des Elektrolyts zu halten, umfaßt.

12. Fackel nach einem der Ansprüche 1 bis 11, **dadurch gekennzeichnet, daß** der Stromversorgungskreis eine Gleichstromversorgungsquelle (10, 7), wenigstens einen Kondensator (8) und einen Schalter (9) umfaßt und daß der die erste Elektrode bildende Injektor (2) ein Potential nahe der elektrischen Masse aufweist.

13. Fackel nach Anspruch 12, **dadurch gekennzeichnet, daß** der Schalter (9) einen Leistungstransistor oder einen Thyristor umfaßt.

14. Fackel nach Anspruch 12 oder Anspruch 13, **dadurch gekennzeichnet, daß** der Kondensator (8) und der Schalter (9) in einem mit dem Körper des Zünders fest verbundenem Gehäuse (50) untergebracht sind.

15. Fackel nach einem der Ansprüche 1 bis 11, **dadurch gekennzeichnet, daß** der Stromversorgungskreis eine Gleichstromversorgungsquelle (10), wenigstens einen Kondensator (8), eine Zerhackerschaltung (91) und einen Aufwärtstransformator (92) umfaßt, dessen Primärseite und Sekundärseite galvanisch isoliert sind, dessen Primärseite mit der Zerhackerschaltung (91) verbunden ist und dessen Sekundärseite zwischen der zweiten Elektrode (5) und dem die erste Elektrode bildenden Injektor (2) angeschlossen ist.

16. Fackel nach einem der Ansprüche 1 bis 15, **dadurch gekennzeichnet, daß** der Isolator (4) ein erstes Isolatorteil (41), das sich ungehindert ausdehnen kann, und ein zweites Isolatorteil (42), das eine Dichtigkeit zwischen der zweiten Elektrode (5) und einem Isolatorträger (19) sicherstellt, umfaßt.

17. Fackel nach Anspruch 16, **dadurch gekennzeichnet, daß** das erste Isolatorteil (41) wenigstens einen aus Bornitrid oder aus Aluminiumoxid ausgebildeten Keramikblock umfaßt.

18. Fackel nach Anspruch 16 oder Anspruch 17, **dadurch gekennzeichnet, daß** das zweite Isolatorteil (42) aus Aluminiumoxid ausgebildet ist und einerseits an die zweite Elektrode (5) und andererseits an den Isolatorträger (19) gelötet ist.

19. Fackel nach Anspruch 16 oder Anspruch 17, **dadurch gekennzeichnet, daß** das zweite Isolatorteil (42) aus einem flexiblen Material, umfassend eines der folgenden Materialien: PTFE, PTFCE, VESPEL, glasfaserbeladenes PTFE, ausgebildet ist und daß das zweite Isolatorteil (42) in einer an dem Isolatorträger (19a) angebrachten Stopfbuchse (23) angebracht ist.

20. Fackel nach Anspruch 16 oder Anspruch 17, **dadurch gekennzeichnet, daß** das zweite Isolatorteil (42) mit einem Koaxialkabelsockel (52), der einen Verbinder (25) eines Koaxialkabels (24) aufnimmt, kombiniert ist.

21. Fackel nach einem der Ansprüche 1 bis 20, **dadurch gekennzeichnet, daß** der Stromversorgungskreis dazu ausgelegt ist, die zweite Elektrode (5) auf ein Potential zwischen 100 und 500 V gegenüber dem Potential der durch den Injektor gebildeten ersten Elektrode zu bringen.

## Claims

1. An ignitor torch (17) suitable for incorporation in a main injector (33) of a liquid-propellant rocket engine, the torch comprising a combustion chamber and an electrolytic ignitor, which electrolytic ignitor comprises a first electrode (2), a second electrode (5) that is electrically insulated from the first electrode (2) by an insulator (4), an injector, an electrolyte tank (12), and an electrolyte distribution channel (3), the torch being **characterized in that** the injector constitutes the first electrode (2) and includes a fuel injector device (26), an oxidizer injector device (27), and an electrolyte injector device (1), **in that** the second electrode (5) extends downstream beyond the injector (2), **in that** the electrolytic ignitor comprises an electrical power supply circuit adapted to raise the second electrode (5) to a potential lying in the range 50 V to 1000 V relative to the potential of the first electrode (2), and **in that** the electrolyte distribution channel (3) opens out via at least one injection hole (1) situated in the vicinity of the outlet from the fuel injector device (26) and the oxidizer injector device (27) in such a manner that the electrolyte injected via said injection hole (1) constitutes a free jet that strikes the second electrode (5) in a zone that is situated outside the body of the injector constituted by the first electrode (2), such that electrolysis and ignition of the gaseous mixture take place downstream from the injector within the combustion chamber of the torch (17).

2. A torch according to claim 1, **characterized in that** the second electrode (5) is placed centrally, and **in that** a plurality of electrolyte injection holes (1) and the outlets from the fuel injector device (26) and from the oxidizer injector device (27) are disposed around the central electrode (5).

3. A torch according to claim 1, **characterized in that** the second electrode (105) is disposed laterally and off-center relative to the electrolyte injection hole (101) and to the outlets from the fuel injector device (26) and from the oxidizer injector device (27).

4. A torch according to any one of claims 1 to 3, **characterized in that** the second electrode (5; 105) is made of a refractory metal of the tungsten or tungsten/rhenium type.

5. A torch according to any one of claims 1 to 4, **characterized in that** the electrolyte present in the tank (12) is constituted by a composition that is different from the fuel applied by the fuel injector device (26) and from the oxidizer applied by the oxidizer injector device (27).

6. A torch according to any one of claims 1 to 5, **characterized in that** the electrolyte is constituted by an aqueous solution of a salt such as an ammonium salt.

7. A torch according to any one of claims 1 to 5, **characterized in that** the electrolyte comprises an ionic liquid having low vapor pressure.

8. A torch according to claim 7, **characterized in that** the ionic liquid is constituted by one of the following compounds: di-ethylammonium formate; and ethyl-methyl-imidazolium tetra-fluoroborate.

9. A torch according to any one of claims 1 to 8, **characterized in that** the electrolyte comprises a mono-propellant based on nitrates in aqueous solution with a water-soluble fuel added thereto.

10. A torch according to anyone of claims 1 and 2, **characterized in that** the fuel injector device (26) and the oxidizer injector device (27) include orifices distributed in a ring around a predetermined axis of the ignitor and **in that** a plurality of electrolyte injection holes (1) are distributed in a ring around said predetermined axis, presenting angular positions that are offset relative to said orifices distributed in a ring.

11. A torch according to any one of claims 1 to 10, **characterized in that** it includes an electrical heater device (16) and passive thermal insulation (32) in order to maintain the temperature of the injector (2) above the freezing point of the electrolyte.

12. A torch according to any one of claims 1 to 11, **characterized in that** the electrical power supply circuit comprises a DC power supply (10, 7), at least one capacitor (8), and a switch (9), and **in that** the injector (2) constituting the first electrode presents a potential close to electrical ground.

13. A torch according to claim 12, **characterized in that** the switch (9) comprises a power transistor or a thyristor.

14. A torch according to claim 12 or claim 13, **characterized in that** the capacitor (8) and the switch (9) are housed in a housing (50) secured to the body of the ignitor.

15. A torch according to any one of claims 1 to 11, **characterized in that** the electrical power supply circuit comprises a DC power source (10), at least one capacitor (8), a chopper circuit (91), and a voltage-raising transformer (92) with its primary and secondary being electrically isolated from each other, the primary being connected to the chopper circuit (91) and the secondary being connected between the second electrode (5) and the injector (2) constituting the first electrode.

16. A torch according to any one of claims 1 to 15, **characterized in that** the insulator (4) comprises a first insulator portion (41) mounted to be able to expand freely, and a second insulator portion (42) providing sealing between the second electrode (5) and an insulator support (19).

17. A torch according to claim 16, **characterized in that** the first insulator portion (41) comprises at least one ceramic block made of boron nitride or of alumina.

18. A torch according to claim 16 or claim 17, **characterized in that** the second insulator portion (42) is made of alumina and is brazed firstly to the second electrode (5) and secondly to the insulator support (19).

19. A torch according to claim 16 or claim 17, **characterized in that** the second insulator portion (42) is made of a flexible material comprising one of the following materials: PTFE, PTFCE, Vespel, and fiberglass-filled PTFE, and **in that** the second insulator portion (42) is mounted in packing (23) mounted on the insulator support (19a).

20. A torch according to claim 16 or claim 17, **characterized in that** the second insulator portion (42) is combined with a coaxial cable socket (52) receiving a connector (25) for a coaxial cable (24).

21. A torch according to any one of claims 1 to 20, **characterized in that** the electrical power supply circuit is adapted to raise the second electrode (5) to a potential lying in the range 100 V to 500 V relative to the potential of the first electrode constituted by the injector.
